# FASCICULE DE BREVET EUROPEEN

(11) **EP 1 491 807 B1**
(45) Date de publication et mention de la délivrance du brevet: **16.08.2006**
(21) Numéro de dépôt: 04102911.7
(22) Date de dépôt: 23.06.2004
(51) Int. Cl.: F16L 9/17

(54) **Elément creux apte à être assemble par raboutage à un élément annexe**
Bestandteil für Rohrverbindung
Pipe connection element

(30) Priorité: 23.06.2003 FR 0350245
(43) Date de publication de la demande: 29.12.2004
(73) Titulaire: COMMISSARIAT A L'ENERGIE ATOMIQUE, 75752 Paris 15ème (FR); Umicore France, 93170 Bagnolet (FR)
(72) Inventeur: SABOURIN, Didier, 94000, CRETEIL (FR); AUBERT, Philippe, 75016, PARIS (FR); CARBUCCIA, Gabriel, 78000, VERSAILLES (FR)
(74) Mandataire: Poulin, Gérard

(56) Documents cités:
- US-A- 2 685 306
- US-A- 3 294 928
- US-A- 3 585 337
- US-A- 5 140 123

## Description

### DOMAINE TECHNIQUE

La présente invention se rapporte de façon générale à un élément creux disposant d'au moins une extrémité de raccord apte à être assemblée par raboutage à un élément annexe, ce dernier prenant par exemple la forme d'un élément creux identique ou similaire.

Plus particulièrement, cet élément creux peut être du type tronçon de tuyauterie comprenant au moins une tôle ainsi qu'au moins une soudure/brasure permettant l'assemblage de deux bords de tôle adjacents. Dans un tel cas, l'invention trouve alors une application toute particulière dans le domaine de l'évacuation des eaux pluviales.

Néanmoins, l'invention n'est pas limitée aux tronçons de tuyauterie mais se rapporte à tout élément creux comportant une ou plusieurs tôles métalliques ou non, assemblées par soudage/brasage, l'élément creux pouvant être de géométrie axisymétrique ou non, d'épaisseur variable ou constante, et de géométrie linéaire ou non. A titre indicatif, des applications possibles sont des conduits d'évacuation de fluides gazeux, par exemple du type traversant des systèmes de ventilation ou des pots d'échappement de véhicules automobiles.

Par ailleurs, l'invention concerne également un procédé de fabrication d'un tel élément creux.

### ETAT DE LA TECHNIQUE ANTERIEURE

Dans le domaine technique des tronçons de tuyauterie pour l'évacuation des eaux pluviales, on connaît une réalisation classique consistant à mettre en forme une unique tôle de zinc, afin que deux de ses bords se chevauchent pour être ensuite solidarisés à l'aide d'un cordon de brasure à l'étain, sur toute la longueur du tronçon en forme d'élément creux.

Si cette technique employée reste globalement satisfaisante en termes de réalisation de l'élément creux, elle présente néanmoins certains inconvénients lorsqu'il s'agit de rabouter celui-ci à un élément annexe, au niveau d'une extrémité de raccord de cet élément creux dont la géométrie doit être modifiée par rapport à une géométrie initiale, afin de permettre l'emboîtement de l'élément annexe, par exemple en son intérieur.

A ce titre, pour assurer le raboutage de l'élément creux avec un élément annexe, ainsi que leur réglage et ajustage réciproques, il est généralement procédé à une opération de débrasage du cordon de brasure au niveau de l'extrémité de raccord concernée, dans le but de pouvoir écarter ou resserrer les deux bords de la tôle en zinc mise en forme. Dans le cas où les deux bords de la tôle en zinc sont écartés l'un de l'autre, le raboutage se poursuit ensuite en faisant pénétrer l'élément annexe à l'intérieur de l'extrémité de raccord aux bords désolidarisés. Il est noté que cette opération de débrasage est nécessaire dans tous les cas où les dimensions respectives de l'élément creux et de l'élément annexe ne permettent pas d'effectuer un simple emboîtement par friction de ces deux éléments.

Par la suite, les bords de l'élément creux, s'ils ont été écartés, sont rabattus sur l'élément annexe, puis les deux éléments raboutés sont brasés afin d'obtenir une liaison mécanique rigide entre ces derniers.

Typiquement, sur un chantier, l'opération d'ouverture des bords de tôle d'une extrémité de raccord de l'élément creux, destinée à coopérer avec une extrémité de raccord de l'élément annexe, a toujours été difficile à mettre en oeuvre. En effet, elle nécessite d'une part le maintien de l'élément creux, et d'autre part l'emploi de divers outils spécifiques tels qu'un fer à souder pour faire fondre le métal d'apport du cordon de brasure, et tels qu'une paire de pinces ou lamelles métalliques fines pour assurer l'écartement des deux bords de tôle.

La difficulté de cette opération réside dans le fait que la fonte du métal d'apport et l'écartement ou le resserrement des bords de tôle doivent être réalisés simultanément. Effectivement, la présence d'un métal d'apport tel que l'étain implique que les bords de tôle se solidarisent d'eux-mêmes s'ils ne sont pas écartés ou resserrés pendant que le métal d'apport reste fondu. Par conséquent, cette opération d'ouverture est difficilement maîtrisable, et peut naturellement provoquer des amorces de rupture dans l'élément creux au niveau du cordon de brasure, pouvant obliger un opérateur à rebraser tout ou partie de cet élément creux.

Ainsi, outre les risques liés à la possibilité d'avoir à effectuer des opérations supplémentaires de rebrasage, il est noté que la conception même de ces éléments creux est relativement néfaste en termes de facilité procurée à l'opérateur effectuant le raboutage des deux éléments, ainsi qu'en termes de temps de réalisation d'un tel raboutage. De plus, le caractère délicat de cette réalisation nécessite un savoir-faire spécifique.

Une autre solution connue de l'art antérieur consiste à assembler les bords de tôle par soudage, avec ou sans métal d'apport, afin d'obtenir l'élément creux en forme de tronçon de tuyauterie.

Cependant, le cordon de soudure obtenu rend l'opération d'ouverture des bords de l'extrémité de raccord quasiment impossible à réaliser, en raison de la grande solidité du cordon constitué d'un mélange homogène des métaux solidifiés.

### EXPOSÉ DE L'INVENTION

L'invention a donc pour but de proposer un élément creux disposant d'au moins une extrémité de raccord apte à être assemblée par raboutage à un élément annexe, l'élément creux remédiant au moins partiellement aux inconvénients mentionnés ci-dessus relatifs aux réalisations de l'art antérieur.

Plus précisément, le but de la présente invention est de présenter un élément creux comprenant au moins une tôle ainsi qu'au moins une soudure/brasure permettant l'assemblage de deux bords de tôle adjacents, et dont la conception permet d'envisager un raboutage avec un élément annexe, un réglage ainsi qu'un ajustement simplifiés par rapport à ceux opérés dans l'art antérieur.

En outre, l'invention a pour but de fournir un procédé de fabrication d'un tel élément creux.

Pour ce faire, l'invention a tout d'abord pour objet un élément creux disposant d'au moins une extrémité de raccord apte à être assemblée par raboutage à un élément annexe, l'élément creux comprenant au moins une tôle ainsi qu'au moins une soudure/brasure permettant l'assemblage de deux bords de tôle adjacents. Selon l'invention, au niveau d'au moins une extrémité de raccord, au moins une soudure/brasure comprend une zone fragilisée.

Avantageusement, avec la conception spécifique de l'élément creux selon l'invention, la désolidarisation des bords de tôle au niveau d'au moins une extrémité de raccord, et par exemple au niveau de chaque extrémité de raccord, peut être effectuée facilement et rapidement par un opérateur, en procédant à la rupture de chaque zone fragilisée de chaque soudure/brasure, préférentiellement à l'aide d'un outillage manuel classique tel qu'une paire de pinces, un cutter, ou encore un tournevis.

Chaque zone fragilisée est effectivement conçue de manière à pouvoir être rompue facilement par un opérateur disposant d'un outillage mécanique simple, tout en étant capable d'assurer l'assemblage géométrique des bords de tôle de l'élément creux, afin que ce dernier conserve sa forme initiale lorsque cet élément n'à pas à être rabouté à un élément annexe, ou lorsque cet élément est rabouté à un élément annexe sans que cela ne nécessite de modification de sa forme initiale.

De cette façon, le raboutage de l'élément creux avec un élément annexe, tel qu'un élément creux identique ou similaire, ne nécessite plus la mise en oeuvre de moyens assurant la fonte de la brasure. De plus, une fois les bords écartés par simple rupture de chaque zone fragilisée présente au niveau de l'extrémité de raccord concernée, l'élément annexe peut être inséré à l'intérieur de l'élément creux, de la même façon que celle rencontrée antérieurement. De la même manière, si les bords sont resserrés suite à la rupture de chaque zone fragilisée, c'est alors l'élément creux qui peut être inséré à l'intérieur de l'élément annexe.

Par conséquent, le temps nécessaire pour réaliser cet assemblage est considérablement réduit par rapport à celui requis avec les éléments creux de l'art antérieur.

Par ailleurs, la longueur de chaque zone fragilisée est avantageusement prévue pour pouvoir assurer un bon emboîtement de l'élément annexe dans l'extrémité de raccord associée lorsque les bords sont écartés et que cette zone fragilisée est totalement rompue, de sorte que l'opérateur réalisant l'écartement des bords de tôle n'a pas à se soucier de la distance sur laquelle la rupture doit être effectuée. Cette rupture sera en effet directement stoppée à l'endroit souhaité par l'autre partie de la soudure/brasure, prenant de préférence la forme d'un cordon de soudure/brasure classique, dès que l'intégralité de la zone fragilisée de cette soudure/brasure aura été rompue.

A ce titre, il est également précisé que les risques d'amorce de rupture de l'élément creux, rencontrés dans l'art antérieur en raison de la présence de moyens assurant la fonte de la brasure, sont naturellement totalement réduits à néant.

De préférence, chaque zone fragilisée comprend au moins un point de soudure/brasure. Cependant, une solution alternative pourrait consister à prévoir que chaque zone fragilisée est un cordon de soudure/brasure, sans sortir du cadre de l'invention. Dans ce dernier cas, le cordon de soudure/brasure, constituant bien entendu une soudure/brasure continue, serait naturellement réalisé de manière à pouvoir être facilement rompu.

De plus, on peut prévoir que l'élément creux comporte une tôle unique mise en forme de sorte que deux bords soient adjacents, les deux bords adjacents étant assemblés à l'aide d'une unique soudure/brasure.

Dans une telle configuration, l'unique soudure/brasure est préférentiellement constituée d'un cordon de soudure/brasure prolongé par au moins une zone fragilisée. D'autre part, il serait également possible de prévoir que l'unique soudure/brasure soit constituée d'une zone comportant une pluralité de points de soudure/brasure, cette zone étant prolongée par au moins une zone fragilisée.

Ainsi, il est à comprendre que chaque soudure/brasure de l'élément creux dispose d'une zone non fragilisée ainsi que d'au moins une zone fragilisée prolongeant cette zone non fragilisée, et que d'une part chaque zone non fragilisée peut indifféremment être constituée d'un cordon de soudure/brasure ou d'une pluralité de points de soudure/brasure, et que d'autre part chaque zone fragilisée peut indifféremment être constituée d'un cordon de soudure/brasure ou d'un ou plusieurs points de soudure/brasure.

De manière préférée, l'élément creux présente une forme tubulaire, et constitue un tronçon de tuyauterie.

Enfin, on peut prévoir que l'élément creux comporte deux extrémités de raccord, et que chaque tôle est métallique.

D'autre part, l'invention a pour objet un procédé de fabrication d'un élément creux disposant d'au moins une extrémité de raccord apte à être assemblée par raboutage à un élément annexe, l'élément creux comprenant au moins une tôle ainsi qu'au moins une soudure/brasure permettant l'assemblage de deux bords de tôle adjacents, le procédé comprenant une étape de réalisation de chaque soudure/brasure effectuée de sorte qu'au niveau d'au moins une extrémité de raccord de l'élément creux, au moins une soudure/brasure comprend une zone fragilisée.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un élément creux selon un premier mode de réalisation préféré de la présente invention,
- la figure 2 représente une vue partielle de face de deux éléments creux identiques raboutés, tels que celui représenté sur la figure 1, et
- la figure 3 représente une vue partielle en perspective d'un élément creux selon un second mode de réalisation préféré de la présente invention.

### EXPOSÉ DÉTAILLÉ DE MODES DE RÉALISATION PRÉFÉRÉS

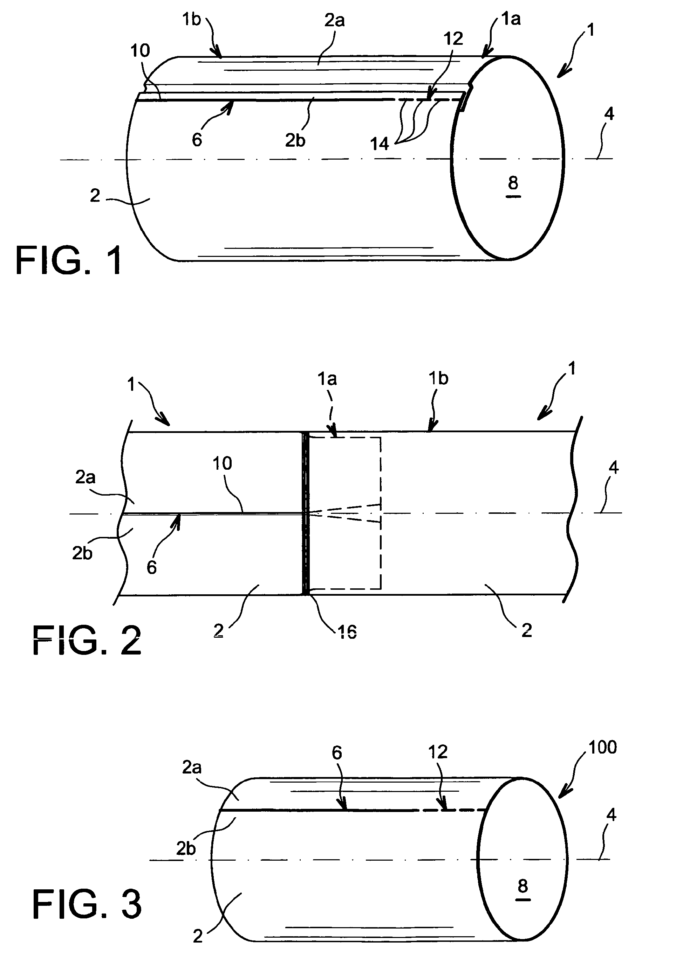

En référence à la figure 1, il est représenté un élément creux 1 selon un premier mode de réalisation préféré de la présente invention.

Il est précisé que dans ce mode de réalisation préféré, l'élément creux 1 prend la forme d'un tronçon de tuyauterie, par exemple destiné à l'évacuation des eaux pluviales.

Comme on peut l'apercevoir sur la figure 1, l'élément creux 1 comporte une unique tôle 2, de préférence en zinc, mais pouvant être réalisée à l'aide de tout autre matériau métallique ou non-métallique.

La tôle 2 est mise en forme de façon à ce que l'élément creux 1 présente une forme sensiblement tubulaire de section circulaire. Pour ce faire, deux bords de tôle 2a et 2b parallèles et opposés de la tôle 2 initialement plane et de forme rectangulaire sont amenés de façon à être adjacents, et de sorte que l'un recouvre partiellement l'autre sur toute la longueur de l'élément creux 1, selon un axe principal longitudinal 4 de ce dernier. Après recouvrement des bords 2a et 2b, la tôle 2 présente alors facilement la forme souhaitée sensiblement tubulaire de section circulaire.

Les bords de tôle 2a et 2b de la tôle 2 sont solidarisés l'un à l'autre par l'intermédiaire d'une unique soudure 6 s'étendant sur toute la longueur de l'élément creux 1, parallèlement à l'axe principal longitudinal 4 de ce dernier. Bien entendu, la soudure 6 effectuée avec ou sans apport pourrait être remplacée par une brasure, sans sortir du cadre de l'invention.

L'élément creux 1 comporte deux extrémités ouvertes et opposées 1a et 1b, chacune permettant l'accès à un espace intérieur cylindrique 8 de cet élément creux 1. Chaque extrémité 1a et 1b est considérée comme une extrémité de raccord apte à être assemblée par raboutage à un élément annexe (non représenté sur cette figure). A ce titre, il est à comprendre par « extrémité de raccord » une extrémité de l'élément creux 1 apte à être emboîtée avec un élément annexe, que cette extrémité ait ou non à subir une modification de sa géométrie pour pouvoir assurer l'emboîtement. Néanmoins, comme cela sera exposé plus clairement ci-dessous, dans ce premier mode de réalisation préféré de la présente invention, seule l'extrémité de raccord 1a est dotée d'une zone fragilisée qui est susceptible d'être rompue facilement afin de pouvoir permettre le modification de la géométrie de cette extrémité. En revanche, l'autre extrémité de raccord 1b est sensiblement identique à celle prévue dans l'art antérieur, à savoir qu'elle dispose d'une soudure/brasure classique rendant la séparation des deux bords de tôle 2a et 2b très difficile.

Bien entendu, il serait également possible de prévoir que l'extrémité de raccord 1b soit de conception analogue à celle de l'extrémité de raccord 1a, sans sortir du cadre de l'invention. D'autre part, il est indiqué que cette extrémité de raccord 1b peut naturellement être assemblée à un élément annexe, par exemple également par raboutage, mais sans que sa géométrie ne soit modifiée.

Toujours en référence à la figure 1, on peut voir que la soudure 6 se présente sous la forme d'un cordon de soudure 10 s'étendant de façon continue et sensiblement homogène depuis l'extrémité de raccord 1b, et étant prolongé par une zone fragilisée 12 située au niveau de l'extrémité de raccord 1a de l'élément 1.

Plus précisément, la zone fragilisée 12 s'étendant parallèlement à l'axe principal longitudinal 4, au niveau de l'extrémité de raccord 1a, sur une longueur appropriée pour que lorsque cette zone fragilisée 12 est totalement rompue par un opérateur, tout élément annexe susceptible de coopérer avec cette extrémité de raccord 1a puisse être correctement emboîté avec cette extrémité aux bords désolidarisés.

De préférence, la zone fragilisée 12 prend la forme d'une pluralité de points de soudure 14, ceux-ci étant par exemple espacés régulièrement et présentant chacun une longueur identique selon l'axe principal longitudinal 4. En d'autres termes, cette zone fragilisée 12 peut être assimilée à une soudure discontinue, prévue de telle sorte qu'elle puisse être rompue facilement par un opérateur disposant d'un outillage mécanique simple, tout en étant capable d'assurer l'assemblage géométrique des bords de tôle 2a et 2b de l'élément creux 1, afin que ce dernier conserve sa forme initiale lorsque l'extrémité de raccord 1a de cet élément 1 n'a pas à être raboutée à un élément annexe, ou lorsque l'extrémité de raccord 1a de cet élément 1 est raboutée à un élément annexe sans que cela ne nécessite de modification de sa forme initiale.

Une telle zone fragilisée 12, du type soudure discontinue, est particulièrement aisée à réaliser à l'aide d'une technique de soudage laser, bien qu'elle soit facile à mettre en oeuvre à l'aide de toute autre technique du type TIG, MIG, faisceau d'électron, brasage, collage, etc. En effet, le laser offre la possibilité d'effectuer des soudures très ponctuelles, par exemple inférieures au millimètre, plus facilement qu'avec les autres techniques énumérées ci-dessus. D'autre part, la technique de soudage laser présente une souplesse d'exploitation qui lui permet de passer indéfiniment d'un mode de soudure continue à un mode de soudure discontinue, et inversement. Elle est également très indiquée pour obtenir des zones fragilisées sous forme de cordon, donc sous forme de soudure continue. Effectivement, il suffit de modifier les paramètres de fonctionnement du laser, en particulier sa puissance, pour que la soudure ne pénètre plus de part en part les deux bords 2a et 2b de la tôle 2. Ainsi, la soudure obtenue est donc plus fragile dans cette zone que dans la zone non fragilisée continue réalisée avec une puissance supérieure. Enfin, il est précisé que les changements de paramètres du laser peuvent s'opérer en ligne, sans avoir à procéder à l'arrêt de ce laser.

A titre d'exemple indicatif, pour un tronçon de tuyauterie en zinc d'évacuation des eaux pluviales de 80 mm de diamètre et de 0,6 mm d'épaisseur, la longueur de la zone fragilisée 12 peut être de l'ordre de 40 mm, et le diamètre de chaque point de soudure 14 d'environ 1 mm. Par ailleurs, le pas au niveau de la zone fragilisée 12 peut être de l'ordre de quelques millimètres, tandis que la zone soudée non fragilisée est de préférence réalisée de façon continue, comme cela a été exposé ci-dessus.

Bien entendu, sans sortir du cadre de l'invention, l'élément creux 1 selon le premier mode de réalisation préféré de la présente invention pourrait être adapté afin d'être réalisé à l'aide d'une pluralité de tôles assemblées entre-elles par soudage. Avec un tel agencement, une ou plusieurs soudures prévues entre les tôles pourraient alors comporter une zone fragilisée au niveau d'au moins une extrémité de raccord de l'élément creux, le nombre de zones fragilisées prévues pour chaque extrémité de raccord concernée pouvant naturellement être adapté en fonction des besoins rencontrés.

A titre d'exemple illustratif, l'élément creux pourrait être conçu de sorte que pour chaque extrémité de raccord concernée, il soit prévu deux zones fragilisées diamétralement opposées.

L'invention se rapporte également à un procédé de fabrication d'un tel élément creux 1, dont la particularité réside dans la manière d'effectuer la soudure 6 entre les bords de tôle 2a et 2b de la tôle 2, cette soudure 6 étant en effet réalisée de sorte qu'au niveau de l'extrémité de raccord 1a de l'élément creux 1, elle comprenne la zone fragilisée 12.

Dans un mode de réalisation préféré du procédé de fabrication selon l'invention, l'étape de réalisation de la soudure 6 est mise en oeuvre de telle sorte que la plupart des paramètres de soudage restent les mêmes durant toute cette étape, que ce soit pour la réalisation du cordon continu 10 ou celle de la zone fragilisée discontinue 12 de la soudure 6.

Une fois l'élément creux 1 réalisé, lorsque l'on désire l'assembler par raboutage à un élément annexe au niveau de l'extrémité de raccord 1a et que les dimensions respectives de l'élément creux 1 et de l'élément annexe ne permettent pas d'effectuer un simple emboîtement par friction, un opérateur peut aisément rompre la zone fragilisée 12 à l'aide d'un outillage manuel classique tel qu'une paire de pinces, un cutter, un tournevis, ou tout autre outil susceptible de permettre la rupture de chacun des points de soudure 14.

Lorsque la zone fragilisée 12 est par exemple totalement rompue, les bords 2a et 2b de la tôle 2 sont alors exclusivement retenus par le cordon de soudure 10 extrêmement rigide, de sorte que l'opérateur est ainsi sûr de ne pas déformer l'élément creux 1 plus que cela n'est nécessaire pour autoriser un bon emboîtement de l'élément annexe dans l'extrémité de raccord 1a aux bords 2a et 2b désolidarisés. Cependant, si besoin est, la zone fragilisée 12 peut n'être rompue que partiellement, les points de soudure restants 14 étant alors suffisamment rigides pour conserver la solidité de l'assemblage.

D'autre part, dans le but d'effectuer un emboîtement aisé, une fois que la zone fragilisée 12 est rompue ou même durant la rupture de cette dernière, les bords 2a et 2b de la tôle 2 peuvent être écartés radialement extérieurement, ou resserrés radialement intérieurement.

A cet égard, la figure 2 montre deux éléments creux 1 identiques assemblés par raboutage, l'extrémité de raccord 1a de l'un des deux éléments 1 coopérant alors avec l'extrémité de raccord 1b de l'autre des deux éléments creux 1.

Après la rupture de la zone fragilisée 12 et le resserrement vers l'intérieur des bords 2a et 2b (schématisés en pointillés sur la figure 2) de l'extrémité de raccord 1a de l'un des deux éléments 1, cette extrémité 1a peut alors être emboîtée dans l'extrémité 1b de l'autre des deux éléments 1 n'ayant fait l'objet d'aucune modification géométrique. Ensuite, les deux éléments 1 raboutés sont définitivement solidarisés par l'intermédiaire d'une brasure 16 sensiblement annulaire, assurant une liaison étanche et rigide entre ces deux éléments creux 1.

Naturellement, ces opérations peuvent être réitérées autant de fois que nécessaire en ajoutant progressivement des éléments creux 1 à l'ensemble présenté sur la figure 2, afin d'obtenir une conduite d'évacuation des eaux pluviales d'une longueur et d'une forme déterminées.

Par ailleurs, il est indiqué que l'élément annexe, prévu pour être emboîté dans l'extrémité de raccord 1a, peut indifféremment disposer d'un diamètre extérieur supérieur ou inférieur au diamètre intérieur de l'élément creux 1. De plus, dans le cas où le diamètre intérieur de l'élément creux 1 est sensiblement identique au diamètre extérieur de l'élément annexe, ou dans le cas où le diamètre intérieur de l'élément annexe est sensiblement identique au diamètre extérieur de l'élément creux 1, un emboîtement par friction de ces deux éléments peut être envisagé, sans que cela ne nécessite de rompre la zone fragilisée 12 de la soudure 6.

En référence à la figure 3, il est représenté un élément creux 100 selon un second mode de réalisation préféré de la présente invention.

Il est précisé que sur les figures 1 à 3, les éléments disposant des mêmes références numériques correspondent à des éléments identiques ou similaires. Par conséquent, on peut voir que l'élément creux 100 selon le second mode de réalisation préféré est sensiblement identique à l'élément creux 1 décrit ci-dessus, à la différence que les bords adjacents 2a et 2b de la tôle 2 ne sont pas disposés en recouvrement, mais agencés dans une configuration bord à bord dans laquelle leurs chants longitudinaux respectifs sont en contact et en regard l'un de l'autre.

Bien entendu, diverses modifications peuvent être apportées par l'homme du métier aux éléments creux 1 et 100 et au procédé de fabrication qui viennent d'être décrits, uniquement à titre d'exemples non limitatifs.

De plus, l'invention n'est pas limitée aux éléments creux prenant la forme de tronçons de tuyauterie comme décrit ci-dessus, mais se rapporte à tout élément creux disposant d'au moins une extrémité de raccord apte à être assemblée par raboutage à un élément annexe et comportant une ou plusieurs tôles métalliques ou non, assemblées par soudage/brasage, l'élément creux pouvant être de géométrie axisymétrique ou non, d'épaisseur variable ou constante, et de géométrie linéaire ou non.

## Revendications

1. Elément creux (1,100) disposant d'au moins une extrémité de raccord (1a) apte à être assemblée par raboutage à un élément annexe, ledit élément creux (1,100) comprenant au moins une tôle (2) ainsi qu'au moins une soudure/brasure (6) permettant l'assemblage de deux bords de tôle adjacents (2a,2b) et comportant un cordon de soudure/brasure (10) formant une zone non fragilisée et s'étendant de façon continue, **caractérisé en ce qu'**au niveau d'au moins une extrémité de raccord (1a), au moins une soudure/brasure (6) comprend une zone fragilisée (12) prolongeant ledit cordon de soudure/brasure (10), ladite zone fragilisée (12) comportant une pluralité de points de soudure/brasure (14) espacés et formant une zone de soudure/brasure discontinue, ou ladite zone fragilisée (12) s'étendant de façon continue en étant réalisée avec une puissance laser inférieure à celle mise en oeuvre pour la réalisation dudit cordon (10) formant la zone non fragilisée.

2. Elément creux (1,100) selon la revendication 1, **caractérisé en ce qu'**il comporte une tôle unique (6) mise en forme de sorte que deux bords (2a,2b) soient adjacents, les deux bords adjacents (2a,2b) étant assemblés à l'aide d'une unique soudure/brasure (6).

3. Elément creux (1,100) selon l'une quelconque des revendications précédentes, **caractérisé en ce que** chaque brasure/soudure (6) est réalisée par soudage laser.

4. Elément creux (1,100) selon l'une quelconque des revendications précédentes, **caractérisé en ce qu'**il présente une forme tubulaire.

5. Elément creux (1,100) selon l'une quelconque des revendications précédentes, **caractérisé en ce qu'**il est un tronçon de tuyauterie et qu'il comporte deux extrémités de raccord (1a, 1b).

6. Elément creux (1,100) selon l'une quelconque des revendications précédentes, **caractérisé en ce que** chaque tôle (2) est métallique.

7. Procédé de fabrication d'un élément creux (1,100) disposant d'au moins une extrémité de raccord (1a) apte à être assemblée par raboutage à un élément annexe, l'élément creux (1,100) comprenant au moins une tôle (2) ainsi qu'au moins une soudure/brasure (6) permettant l'assemblage de deux bords de tôle adjacents (2a,2b) et comportant un cordon de.soudure/brasure (10) s'étendant de façon continue, ledit procédé comprenant une étape de réalisation de chaque soudure/brasure (6), **caractérisé en ce que** ladite étape de réalisation de chaque soudure/brasure (6) est effectuée de sorte qu'au niveau d'au moins une extrémité de raccord (1a) de l'élément creux (1), pour au moins une soudure/brasure (6), il est réalisé une zone fragilisée (12) prolongeant ledit cordon de soudure/brasure (10) de cette soudure/brasure (6), ladite zone fragilisée (12) comportant une pluralité de points de soudure/brasure (14) espacés et formant une zone de soudure/brasure discontinue.

8. Procédé selon la revendication 7, **caractérisé en ce que** ladite étape de réalisation de chaque soudure/brasure (6) est mise en oeuvre à l'aide d'une technique de soudage laser.

9. Procédé de fabrication d'un élément creux (1,100) disposant d'au moins une extrémité de raccord (1a) apte à être assemblée par raboutage à un élément annexe, l'élément creux (1,100) comprenant au moins une tôle (2) ainsi qu'au moins une soudure/brasure (6) permettant l'assemblage de deux bords de tôle adjacents (2a,2b) et comportant une zone non fragilisée (10) s'étendant de façon continue, ledit procédé comprenant une étape de réalisation de chaque soudure/brasure (6), **caractérisé en ce que** ladite étape de réalisation de chaque soudure/brasure (6) est effectuée par soudage laser, de sorte qu'au niveau d'au moins une extrémité de raccord (1a) de l'élément creux (1), pour au moins une soudure/brasure (6), il est réalisé une zone fragilisée (12) prolongeant ladite zone non fragilisée (10) de cette soudure/brasure (6), ladite zone fragilisée (12) s'étendant de façon continue et étant réalisée avec une puissance laser inférieure à celle mise en oeuvre pour la réalisation de ladite zone non fragilisée (10).

## Claims

1. Hollow element (1, 100) provided with at least one connection end (1a) suitable for assembly by joining to an appended element, said hollow element (1, 100) comprising at least one sheet element (2) as well as at least one weld/brazing (6) allowing for the assembly of two edges of adjacent sheet elements (2a, 2b) and comprising a welding/brazing bead (10) forming an area not rendered fragile and extending continuously, **characterised in that**, in the area of at least one connection end (1a) at least one weld/brazing (6) comprises an area (12) rendered fragile, extending said welding/brazing bead (10), said area (12) rendered fragile comprising a plurality of welding/brazing points (14) spaced apart and forming a discontinuous welding/brazing area or said area (12) rendered fragile extending continuously by being formed with a laser power less than that applied for the formation of said bead (10) forming the area not rendered fragile.

2. Hollow element (1, 100) according to Claim 1, **characterised in that** it comprises one single sheet element (6) shaped in such a way that two edges (2a, 2b) are adjacent, the two adjacent edges (2a, 2b) being assembled with the aid of a single weld/brazing (6).

3. Hollow element (1, 100) according to any one of the preceding claims, **characterised in that** each weld/brazing (6) is produced by a laser welder.

4. Hollow element (1, 100) according to any one of the preceding claims, **characterised in that** it has a tubular shape.

5. Hollow element (1, 100) according to any one of the preceding claims, **characterised in that** it is a pipe section and that it comprises two connection ends (1a, 1b) .

6. Hollow element (1, 100) according to any one of the preceding claims, **characterised in that** each sheet element (2) is metallic.

7. Method for the manufacture of a hollow element (1, 100) provided with at least one connection end (1a) suitable for assembly by joining to an appended element, the hollow element (1, 100) comprising at least one sheet element (2) as well as at least one weld/brazing (6) allowing for the assembly of two edges of adjacent sheet elements (2a, 2b) and comprising a welding/brazing bead (10) extending continuously, said method comprising a stage of formation of each weld/brazing (6), **characterised in that** said stage of formation of each weld/brazing (6) is carried out in such a way that in the area of at least one connection end (1a) of the hollow element (1), for at least one weld/brazing (6) an area (12) rendered fragile is formed, extending said welding/brazing bead (10) of this weld/brazing (6), said area (12) rendered fragile comprising a plurality of welding/brazing points (14) spaced apart and forming a discontinuous welding/brazing area.

8. Method according to Claim 7, **characterised in that** said stage of formation of each weld/brazing (6) is carried out with the aid of a laser welding technique.

9. Method for the manufacture of a hollow element (1, 100) provided with at least one connection end (1a) suitable for assembly by joining to an appended element, the hollow element (1, 100) comprising at least one sheet element (2) as well as at least one weld/brazing (6) allowing for the assembly of two edges of adjacent sheet elements (2a, 2b) and comprising an area (10) not rendered fragile extending continuously, said method comprising a stage of formation of each weld/brazing (6), **characterised in that** said stage of formation of each weld/brazing (6) is carried out by laser welding in such a way that, in the area of at least one connection end (1a) of the hollow element (1), for at least one weld/brazing (6), an area (12) rendered fragile is formed, extending said area (10) not rendered fragile of this weld/brazing (6), said area (12) rendered fragile extending continuously and being formed by a laser power less than that applied for the formation of said area (10) not rendered fragile.

## Patentansprüche

1. Hohlelement (1, 100), das über mindestens ein Verbindungsende (1a) verfügt, das durch Anstückung mit einem Anschlusselement verbunden werden kann, wobei das Hohlelement (1, 100) wenigstens ein Blech (2) sowie wenigstens eine Schweißung/Lötung (6) umfasst, welche die Vereinigung der beiden aneinanderstoßenden Blechränder (2a, 2b) ermöglicht und eine Schweißnaht/lötnaht (10) aufweist, die eine ungeschwächte Zone bildet und sich kontinuierlich erstreckt,
**dadurch gekennzeichnet, dass** in Höhe wenigstens eines Verbindungsendes (1a) wenigstens eine Schweißung/Lötung (6) eine die genannte Schweißnaht/Lötnaht (10) verlängernde geschwächte Zone (12) aufweist, wobei die genannte geschwächte Zone (12) eine Vielzahl von Schweiß-/Lötpunkten (14) umfasst, die voneinander beabstandet sind und eine diskontinuierliche Schweiß-/Lötzone bilden, oder die genannte geschwächte Zone (12) erstreckt sich auf kontinuierliche Weise, indem sie mit einer Laserleistung realisiert wird, die niedriger als diejenige ist, die zur Realisierung der die ungeschwächte Zone bildenden Naht (10) angewendet wird.

2. Hohlelement (1, 100) nach Anspruch 1, **dadurch gekennzeichnet, dass** es ein einziges Blech (2) umfasst, das so geformt ist, dass die beiden Ränder (2a, 2b) aneinander stoßen, wobei die beiden aneinander stoßenden Ränder (2a, 2b) mit Hilfe einer einzigen Schweißung/Lötung (6) vereinigt sind.

3. Hohlelement (1, 100) nach einem der vorangehenden Ansprüche, **dadurch gekennzeichnet, dass** jede Schweißung/Lötung (6) durch Laserschweißen realisiert wird.

4. Hohlelement (1, 100) nach einem der vorangehenden Ansprüche, **dadurch gekennzeichnet, dass** es rohrförmig ist.

5. Hohlelement (1, 100) nach einem der vorangehenden Ansprüche, **dadurch gekennzeichnet, dass** es ein Rohrleitungsstück ist, und dass es zwei Anschlussenden (1a, 1b) umfasst.

6. Hohlelement (1, 100) nach einem der vorangehenden Ansprüche, **dadurch gekennzeichnet, dass** jedes Blech (2) metallisch ist.

7. Verfahren zur Herstellung eines Hohielements (1, 100), das über wenigstens ein Verbindungsende (1a) verfügt, das durch Anstückung mit einem Anschlusselement verbunden werden kann, wobei das Hohlelement (1, 100) wenigstens ein Blech (2) sowie wenigstens eine Schweißung/Lötung (6) umfasst, welche die Vereinigung der beiden aneinanderstoßenden Blechränder (2a, 2b) ermöglicht und eine Schweißnaht/Lötnaht (10) aufweist, die sich kontinuierlich erstreckt, wobei das genannte Verfahren einen Schritt zur Realisierung jeder Schweißung/Lötung (6) umfasst,
**dadurch gekennzeichnet, dass** der genannte Schritt zur Realisierung jeder Schweißung/Lötung (6) so ausgeführt wird, dass in Höhe wenigstens eines Verbindungsendes (1a) des Hohlelements (1) bei wenigstens einer Schweißung/Lötung (6) eine geschwächte Zone (12) realisiert wird, welche die genannte Schweißnaht/Lötnaht (10) dieser Schweißung/Lötung (6) verlängert, wobei die genannte geschwächte Zone (12) eine Vielzahl von Schweiß-/Lötpunkten (14) umfasst, die voneinander beabstandet sind und eine diskontinuierliche Schweiß-/Lötzone bilden.

8. Verfahren nach Anspruch 7, **dadurch gekennzeichnet, dass** der genannte Schritt zur Realisierung jeder Schweißung/Lötung (6) mit Hilfe einer Laserschweißtechnik ausgeführt wird.

9. Verfahren zur Herstellung eines Hohlelements (1, 100), das über wenigstens ein Verbindungsende (1a) verfügt, das durch Anstückung mit einem Anschlusselement verbunden werden kann, wobei das Hohlelement (1, 100) wenigstens ein Blech (2) sowie wenigstens eine Schweißung/Lötung (6) umfasst, welche die Vereinigung der beiden aneinanderstoßenden Blechränder (2a, 2b) ermöglicht und eine ungeschwächte Zone (10) aufweist, die sich kontinuierlich erstreckt, wobei das genannte Verfahren einen Schritt zur Realisierung jeder Schweißung/Lötung (6) umfasst,
**dadurch gekennzeichnet, dass** der genannte Schritt zur Realisierung jeder Schweißung/Lötung (6) durch Laserschweißen erfolgt, so dass in Höhe wenigstens eines Verbindungsendes (1a) des Hohlelements (1) bei wenigstens einer Schweißung/Lötung (6) eine geschwächte Zone (12) realisiert wird, welche die genannte ungeschwächte Zone (10) dieser Schweißung/Lötung (6) verlängert und mit einer Laserleistung realisiert wird, die niedriger als diejenige ist, die zur Realisierung der genannten ungeschwächten Zone (10) angewendet wird.
